# EUROPÄISCHE PATENTSCHRIFT

(11) **EP 2 935 879 B1**
(45) Veröffentlichungstag und Bekanntmachung des Hinweises auf die Patenterteilung: **15.11.2017**
(21) Anmeldenummer: 13824120.3
(22) Anmeldetag: 23.12.2013
(51) Int. Cl.: F03D 80/80

(54) **VERFAHREN UND VORRICHTUNG ZUR ERMITTLUNG UND/ODER BESEITIGUNG DER VERDRILLUNG EINES KABELBAUMES EINER WINDENERGIEANLAGE**
METHOD AND DEVICE FOR DETERMINING AND/OR ELIMINATING THE TWISTING OF A CABLE HARNESS IN A WIND TURBINE
PROCÉDÉ ET DISPOSITIF POUR DÉTECTER ET/OU ÉLIMINER LA TORSION D'UN FAISCEAU DE CÂBLES D'UNE ÉOLIENNE

(30) Priorität: 21.12.2012 DE 102012113058
(43) Veröffentlichungstag der Anmeldung: 28.10.2015
(73) Patentinhaber: 2-B Energy B.V., 7556 PE Hengelo (NL)
(72) Erfinder: JAKOBSSON, Mikael, A-1230 Wien (AT); PEELS, Herbert, NL-7631 HS Ootmarsum (NL); LOHAUS, Marcel, 48477 Hörstel-Riesenbeck (DE)
(74) Vertreter: Träger, Denis
(86) Internationale Anmeldenummer: PCT/EP2013/003903
(87) Internationale Veröffentlichungsnummer: WO 2014/095083

(56) Entgegenhaltungen:
- CN-U- 202 746 120
- JP-A- 2004 084 518
- JP-A- 2008 298 051
- US-A1- 2012 006 578
- US-A1- 2012 133 144

## Beschreibung

Die Erfindung betrifft ein Verfahren zur Ermittlung und/oder Beseitigung der Verdrillung eines Kabelbaumes einer Windenergieanlage gemäß dem Oberbegriff des Anspruchs 1. Des weiteren betrifft die Erfindung eine Vorrichtung zur Ermittlung und/oder Beseitigung der Verdrillung eines Kabelbaums einer Windenergieanlage gemäß dem Oberbegriff des Anspruchs 11. US 2012/133144 A1 und US 2012/006578 A1 offenbaren jeweils eine Windkraftanlage mit einem Kabelbaum. Windenergieanlagen dienen zur Umwandlung von Windenergie in elektrische Energie. Dazu weist eine Windenergieanlage einen Rotor auf, der mit einem oder mehreren Rotorblättern ausgestattet ist. Die Rotorblätter sind an einer Nabe angelenkt, die auf einer Rotorachse angeordnet ist. Die Rotorachse ist in einer so genannten Gondel gelagert, die wiederum drehbar auf einen Turm der Windenergieanlage montiert ist.
Der Rotor wird durch den einströmenden Wind in eine Drehbewegung versetzt. Über die Achse des Rotors, gegebenenfalls über ein Getriebe, wird ein Generator angetrieben, der elektrische Energie abgibt. Um einerseits die elektrische Energie zum Verbraucher abzuleiten und andererseits unter anderem eine Steuerung der Windenergieanlage durchzuführen, ist zwischen der gegenüber dem Turm drehbaren Gondel und üblicherweise einem gegenüber der Umgebung der Windenergieanlage ortsfesten Element, wie einem bodennahen Bereich des Turms, einer dort angeordneten Anlage oder direkt dem Untergrund, ein Kabelstrang oder Kabelbaum angeordnet. Das obere, an der drehbaren Gondel befestigte Ende wird auch als beweglicher Endbereich bezeichnet. Währenddessen wird das untere Ende des Kabelbaums auch als fester Endbereich bezeichnet. Bei einer Drehung der Gondel um die Achse wird der Kabelstrang verdrillt.

Um die Windenergieanlage möglichst immer im optimalen Leistungsbereich und damit mit optimalem Wirkungsgrad zu betreiben, muss die Rotorachse möglichst parallel zur Windrichtung ausgerichtet sein. Hierzu wird die Gondel der Windenergieanlage entweder aktiv, also beispielsweise motorisch, oder passiv, also insbesondere durch den Wind, gegenüber dem Turm mit der Rotorachse in Windrichtung gedreht. Dabei kann es passieren, dass die Windrichtung mehrfach mit demselben Drehsinn im Kreis dreht. Somit kann sich die Gondel durchaus um mehrere Umdrehungen in dieselbe Richtung drehen und zu einer entsprechenden Verdrillung des Kabelbaums führen.

Dies führt zum nachteiligen Effekt, dass der von der Gondel zum festen Endbereich verlaufende Kabelbaum immer stärker verdrillt wird. Dies kann bis zur Zerstörung des Kabelbaums und/oder anderer Komponenten der Windenergieanlage führen.

Es ist daher Aufgabe der Erfindung, ein Verfahren und/oder eine Vorrichtung bereitzustellen, das beziehungsweise die eine Feststellung des Verdrillungszustandes des Kabelbaums und gegebenenfalls eine Beseitigung der Verdrillung auf einfache Weise ermöglicht.

Diese Aufgabe der Erfindung wird durch ein Verfahren mit den Maßnahmen des Anspruchs 1 gelöst. Das Verfahren ist dadurch gekennzeichnet, dass eine Verdrillung des Kabelstrangs in eine Bewegung eines Masseelements transformiert oder umgesetzt wird. Dies bedeutet, dass bei einer Drehung der Gondel ein insbesondere separates Masseelement beziehungsweise Gewicht bewegt wird. Das Masseelement kann damit insbesondere zur Anzeige einer erfolgten Drehung beziehungsweise Verdrillung des Kabelstrangs dienen. Unterschiedliche Positionen des Masseelements repräsentieren dabei entsprechend eine unterschiedliche starke Verdrillung. Bevorzugt wird das Masseelement dazu bei zunehmender Verdrillung des Kabelstrangs in einer Richtung bewegt, vorzugsweise linear.

Die Bewegung des Masseelements wird insbesondere zumindest im Wesentlichen als vertikale Bewegung ausgeführt. Folglich bewegt sich das Masseelement zumindest im Wesentlichen aufwärts oder abwärts. Weiter bevorzugt bewegt sich das Masseelement bei einer zunehmenden Verdrillung des Kabelstrang aufwärts. Umgekehrt bewegt sich das Masseelement insbesondere bei einer abnehmenden Verdrillung des Kabelstrangs abwärts. Dies bietet den Vorteil, dass das Masseelement bei stärkerer Verdrehung beziehungsweise Verdrillung des Kabelstrangs potentielle Energie beziehungsweise Lageenergie gewinnt. Diese potentielle Energie kann beispielsweise grundsätzlich auch wieder zur Beseitigung der Verdrillung verwendet werden. Weiter bevorzugt weist das Masseelement eine Neutralstellung auf. Diese Neutralstellung kann insbesondere an einem unteren Bereich der Bewegungsbahn des Masseelements liegen. Hier kann das Masseelement vorzugsweise von seiner Ausgangs- oder Neutralstellung lediglich nach oben bewegt werden. Die Gondel hat bevorzugt ihre Neutralstellung erreicht, wenn der Kabelbaum möglichst nicht mehr verdrillt ist, also ohne Verdrehung entlang seiner Längsachse ist. Besonders erfolgt bevorzugt auf beiden Seiten der Neutralstellung eine Zunahme der potentiellen Energie des Masseelements beziehungsweise eine Aufwärtsbewegung. Dies bedeutet insbesondere, dass beispielsweise bei einem Kabelbaum ohne Verdrillung sich das Masseelement an seiner tiefsten Position befindet. Sobald der Kabelbaum im einen oder anderen Drehsinn verdreht wird, bewegt sich das Masseelement aufwärts, so dass insbesondere seine potentielle Energie zunimmt. Die Verdrillung wird mittels eines flexiblen Zugeelements in die Bewegung des Masseelements transformiert. Als Zugelemente kommen insbesondere seilförmige, ketten- oder schnurähnliche Elemente in Betracht, wie insbesondere ein Seil und/oder ein Riemen und/oder eine Kette. Das Zugelement wird um beziehungsweise auf den Kabelstrang oder Kabelbaum gewickelt. Am Kabelstrang ist ein diesen umgebend angeordnetes Rollelement angeordnet. Auf das Rollelement kann das Zuglement gewickelt sein. Alternativ kann das Zugeelement auch nach Art eines Riemens beispielsweise als Schlaufe um den Kabelstrang gelegt sein, insbesondere um ein weiteres Rollelement anzutreiben. Bevorzugt ist das wenigstens einer Rollelement als Rad, Rolle, Trommel oder Ähnliches ausgebildet. Weiter bevorzugt wird das Zugelement bei einer Drehung der Gondel aufgerollt und/oder abgerollt, insbesondere bei einer zunehmenden beziehungsweise abnehmenden Verdrillung des Kabelbaums. Es kann sich dabei um das am Kabelstrang direkt angeordnete Zugelement handeln. Alternativ kann hierzu auch ein weiteres Zugelement vorgesehen sein.

Bevorzugt ist das Zugelement zwischen ersten Rollelement und einem zweiten Rollelement hin- und herbewegbar, insbesondere spulbar, wickelbar und/oder aufrollbar. Das Zugelement kann dabei vorzugsweise zwischen den Rollelementen hin- und hergespult werden. Durch die Kopplung kann sichergestellt werden, dass jederzeit der aktuelle Verdrillungszustand des Kabelbaums durch das entsprechende Masseelement repräsentiert wird.

Besonders bevorzugt ist zumindest eines der Rollenelemente mit einer Untersetzung oder Übersetzung versehen. Somit wird die Verdrillung entsprechend über eine Untersetzung oder Übersetzung in die vertikale Bewegung des Masseelements transformiert beziehungsweise umgesetzt. Besonders bevorzugt wird ein weiteres mit dem Masseelement verbundenes Zugelement auf ein weiteres, mit einem der übrigen Rollelemente verbundenes Rollelement aufgewickelt oder von diesem abgewickelt. Dazu weisen insbesondere die Rollelemente zumindest zwei separate Bereiche auf, um jeweils ein Zugelement aufzunehmen. Beispielsweise können zwei Bereiche unterschiedliche Durchmessers vorgesehen sein. Diese können dann mit einer Untersetzung beziehungsweise Übersetzung die Drehbewegung der Gondel beziehungsweise den Verdrillungszustand des Kabelbaums transformieren.

Vorzugsweise wird mittels wenigstens eines Sensors und/oder mittels einer Skala wenigstens eine Position des Masseelements ermittelt. Es handelt sich dabei insbesondere um eine Position des Masseelements in der Nähe wenigstens einer vorherbestimmten Endlage. Vorzugsweise sind zwei Endlagen, insbesondere eine obere und eine untere Endlage, zur Ermittlung vorgesehen. Besonders bevorzugt wird als Sensors zumindest ein Näherungsschalter verwendet. Der Näherungsschalter kann insbesondere als berührungslos arbeitender Kontakt ausgebildet sein. Alternativ kommen auch mechanische Schalter oder Ähnliches, wie beispielsweise elektrisches Kontakt in Betracht. Zur Auswertung des Sensorsignals kann insbesondere eine Mess- und/oder Steuerungseinrichtung, wie beispielsweise eine einfache elektrische oder elektronische Schaltung, ein Prozessrechner, ein Computer oder Ähnliches vorgesehen sein. Alternativ kann die Skala zur einfachen manuellen Ablesung durch einen Bediener der Windenergieanlage dienen. Dies kann insbesondere auch aus der Entfernung beispielsweise durch eine Bildübertragung mittels einer Kamera geschehen. Der Prozess der Beseitigung der Verdrillung kann dann auch manuell durch einen Bediener gestartet werden.
Insbesondere wird die potentielle Energie beziehungsweise Lageenergie des Masseelements zur zumindest teilweisen Abwicklung des Zugelements und/oder zu den so zumindest teilweise Beseitigung der Verdrillung des Kabelbaums verwendet. Hierzu wird die Gondel insbesondere einen frei drehbaren Zustand gebracht. Dies kann beispielsweise durch Lösen von Bremsen, Abschaltung eines Haltemotors und/oder auch durch Änderung des Anstellwinkels der Rotorblätter geschehen, so dass keine Windlast mehr zu einer Verdrehung führt. Indem das Masseelement aufgrund der einwirkenden Schwerkraft über das wenigstens einen Zugelement und den Kabelbaum eine Drehung der Gondel hervorruft, kann die Verdrillung des Kabelbaums reduziert werden. Zum Starten dieser Reduzierung der Verdrillung wird insbesondere ein Signal ausgewertet. Sobald eine gewisse Verdrillung überschritten ist, wird insbesondere eine solche "Entdrillung" beziehungsweise Beseitigung der Verdrillung begonnen. Dies geschieht vorzugsweise entsprechend durch der Verdrillung entgegengesetztes Drehen der Gondel beziehungsweise des beweglichen Endes des Kabelbaums. Alternativ oder ergänzend kann auch ein motorischer Antrieb zum Drehen der Gondel vorgesehen sei.
Die eingangs genannte Aufgabe wird außerdem gelöst durch eine Vorrichtung mit den Merkmalen des Anspruchs 11. Sie ist dadurch gekennzeichnet, dass eine Einrichtung, insbesondere eine Transformationsvorrichtung, zur Transformation der Verdrillung des Kabelbaums in eine Bewegung eines Masseelements vorgesehen ist. Es handelt sich dabei insbesondere um eine mechanische Vorrichtung. Die Vorrichtung ist insbesondere zur *Ermittlung* und/oder Beseitigung der Verdrängung eines Kabelbaums einer Windenergieanlage vorgesehen. Insbesondere dient sie zur Ausführung des oben beschriebenen Verfahrens. Die Windenergieanlage weist einen Kabelbaum beziehungsweise Kabelstrang mit einem festgelegten Endbereich und einen davon beanstandeten, insbesondere mit einer Gondel der Windenergieanlage verbundenen, drehbaren Endbereich auf. Dabei ist der Kabelstrang bei einer Drehung der Gondel beziehungsweise des freien Endbereich des Kabelstrangs zumindest abschnittsweise zunehmend oder abnehmend verdrillbar. Es ist ein Zugelement zur Transformation der Drehung des Kabelstrangs in eine Bewegung des Masseelements vorgesehen. Bei der Bewegung handelt es sich insbesondere um eine Vertikalbewegung. Dementsprechend kann sich das Masseelement vorzugsweise im Wesentlichen linear nach oben und/oder nach unten bewegen. Die Bewegung wird insbesondere durch eine obere Endlage und eine untere Endlage begrenzt. Zwischen diesen kann sich das Masseelement im Wesentlichen frei bewegen. Besonders bevorzugt erfolgt eine Transformation der Gondeldrehung um eine Neutralstellung des Masseelements beziehungsweise der Gondel herum jeweils eine Zunahme der potentiellen Energie des Masseelements. Insbesondere wird das Masseelement angehoben. Als Neutralstellung der Gondel kann insbesondere eine Stellung angesehen werden, bei der praktisch keine Verdrillung des Kabelbaums vorhanden ist. Eine Drehung der Gondel in die eine oder die andere Richtung sorgt für eine Verdrillung des Kabelbaums und damit zu einer Abweichung von den Neutralstellung.

Das Zugelement ist um ein am Kabelbaum angeordnetes Rollelement wickelbar. Dabei dient insbesondere wenigstens ein zweites Rollelement zur Transformation in eine vertikale Bewegung des Masseelements. Insbesondere ist eine Unter- oder Übersetzung für Transformation in die Bewegung des Masseelements vorgesehen. Dies kann beispielsweise durch unterschiedlich große Durchmesser eines oder mehrerer auf einer gemeinsamen Achse angeordneter Rollenelemente, insbesondere einer ähnlichem bestehen. Alternativ kann beispielsweise ein Getriebe vorgesehen sein.

Zur Ermittlung einer Position, insbesondere einer vorher bestimmten Endlage des Masseelements ist wenigstens ein Sensor und/oder wenigstens eine Skala vorgesehen. Der Sensor ist insbesondere als Näherungsschalter ausgebildet, vorzugsweise als Druckschalter, magnetisch ausgelöster Reedkontakt, Ultraschallsensor oder ähnlichem.

Besonders bevorzugt ist zur zumindest teilweise Beseitigung der Verdrillung des Kabelbaums ein Teil der gespeicherten potentiellen Energie des Masseelements in eine Drehbewegung der Gondel unwandelbar. Diese ruft durch Umwandlung der Energie in Bewegungsenergie eine Bewegung der Gondel hervor. Dabei bewegt sich dann das Masseelement entsprechend von einer erhöhten Position abwärts. Über die Zugelemente wird der Kabelbaum angetrieben und damit die Verdrillung verringert. Die Freigabe der Gondel, also insbesondere ein Lösen von Bremsen oder anderen Blockierungen und/oder das Auslesen und Auswerten der Sensoren einschließlich einer Entscheidung über eine erforderliche Verringerung der Verdrillung wird insbesondere durch eine Steuerungseinrichtung vorgenommen. Hierzu kommt insbesondere eine einfache elektrische oder elektronische Schaltung wie auch ein Prozessrechner, ein Computer oder Ähnliches in Betracht. Die Steuerungseinrichtung ist der Lage, die Sensoren auszulesen. Insbesondere wird erreicht, dass durch das Masseelement in einer Endlage der Vorgang der Verringerung der Verdrillung zu initiieren ist, wozu die Sensoren entsprechend ausgelesen werden. Beispielsweise kann dann ein motorisches Drehen der Gondel erfolgen oder eben auch eine Verringerung der Verdrillung beziehungsweise "Entdrillung" mittels des sich aufgrund der Schwerkraft herabbewegenden Masseelements.

Ein bevorzugtes Ausführungsbeispiel der Erfindung wird im folgenden anhand der Zeichnung näher beschrieben. In dieser zeigen:

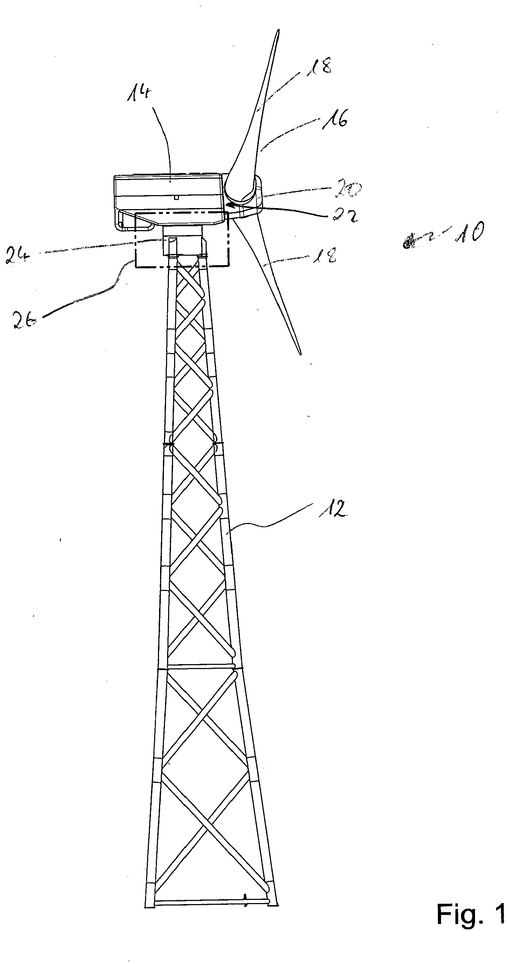

Fig. 1: eine Seitenansicht einer erfindungsgemäßen Windenergieanlage,
Fig. 2: eine Darstellung der erfindungsgemäßen Vorrichtung, und
Fig. 3: eine Detailansicht A gemäß Fig. 2.

Die Windenergieanlage 10 weist einen Turm 12 und eine Gondel 14 mit einem Rotor 16 auf. Der Rotor 16 zeichnet sich hier durch zwei Rotorblätter 18 aus. Als zentrales Element des Rotors 16 ist eine Rotornabe 20 auf einer Rotorachse 22 vorgesehen. Die Rotorachse 22 ist wiederum im Innern der Gondel 14 drehbar gelagert.

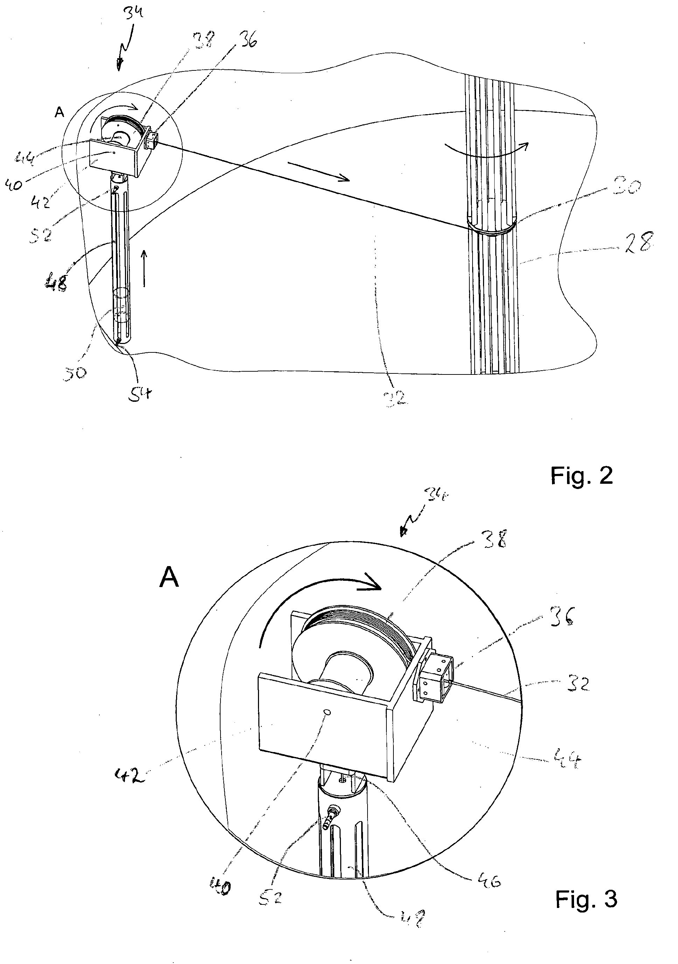

Die Gondel 14 ist am Turm 12 um eine senkrechte Drehachse gegenüber dem Turm 12 drehbar gelagert. Hierzu dient ein Drehlager 24. Die Markierung 26 zeigt im Wesentlichen einen in Fig. 2 vergrößerten Ausschnitt. Darin ist zum einen der von der Gondel 14 nach unten verlaufende Kabelbaum 28 dargestellt, der aus einer Reihe separater und/oder zusammengefasster langgestreckter Kabel beziehungsweise Leitungen besteht. Auf eine am Kabelbaum 28 angeordnete Rolle 30 kann ein Stahlseil 32 aufgewickelt werden. Das Stahlseil 32 verläuft hier zumindest im Wesentlichen horizontal oder alternative auch schräg. Mit dem vom Kabelbaum 28 abgewandten Ende läuft das Stahlseil 32 wiederum in eine Transformationsvorrichtung 34, die in der Fig. 3 im Detail dargestellt ist. Das Stahlseil 32 wird dazu durch eine Umlenkeinheit 36 auf eine Rolle 38 geführt. Auf diese Rolle 38 kann das Stahlseil 32 aufgerollt werden. Die Transformationsvorrichtung 34 dient dabei als eigentliche Vorrichtung zur Ermittlung und gegebenenfalls Beseitigung des Verdrillungszustandes des Kabelbaums 28.

Die Rolle 38 ist mit ihrer Achse 40 an einem Rahmen 42 gelagert. Die Achse 40 verläuft hier horizontal. Auf der Achse 40 der Rolle 38 ist eine weitere Rolle 44 kleineren Durchmessers angeordnet. Die beiden Rollen 38 und 44 sind fest mit der Achse 40 verbunden. Auf der Rolle 44 ist ein weiteres Stahlseil 46 aufgewickelt. Aufgrund des kleineren Durchmessers der Rolle 44 wird eine Übersetzung zwischen den beiden Stahlseilen 32 und 44 bereitgestellt.

Dieses Stahlseil 46 läuft senkrecht nach unten in einen Rohrabschnitt 48. In dem Rohrabschnitt 48 befindet sich ein Masseelement 50 beziehungsweise Gewichtsstück, das sich darin auf- und abbewegen kann. Das Masseelement 50 ist dazu fest mit dem Stahlseil 46 verbunden. Bei einer Drehung der Rollen 38 und 44 um die Achse 40 wird das Stahlseil 46 auf die Rolle 44 aufbeziehungsweise von dieser abgewickelt. Somit bewegt sich das Masseelement 50 auf- oder abwärts.

Am oberen Endbereich des Rohrabschnitts 48 ist ein oberer Sensor 52 angeordnet. Am unteren Endbereich des Rohrabschnitts 48 ist ein unterer Sensor 54 angeordnet. Diese Sensoren 52 und 54 dienen dazu, die Annäherung des Masseelement 50 zu detektieren. Sobald sich dieses in der Nähe eines der Sensoren 52 oder 54 befindet, gibt dieser ein entsprechendes Signal ab. Dieses wird insbesondere von einer hier nicht gezeigten Steuerungseinrichtung ausgewertet.

Aufgrund der potentiellen Energie des Masseelements 50 kann damit eine entsprechende Beseitigung der Verdrillung des Kabelbaums 28 erfolgen. Hierzu bewegt sich das Masseelement 50 abwärts und dreht dabei über die Stahlseile 32 und 46 den Kabelbaum 28. Das Masseelement 50 bewegt sich dabei wieder in einen mittleren Bereich des Rohrabschnitts 48 zurück. Das Masseelement 50 sollte dabei ein hinreichende große Masse aufweisen, um durch Einsatz seiner Lageenergie eine Drehung der Gondel 14 hervorrufen zu können.

Mittels der Pfeile insbesondere in der Fig. 2 wird die Funktionsweise der Vorrichtung angedeutet. Demnach wird im Folgenden ein erfindungsgemäßes Verfahren kurz beschrieben:

Der Kabelbaum 28 dreht sich beispielsweise aufgrund einer Drehung der Gondel 14 in Richtung des daran eingezeichneten Pfeils links herum um seine Längsmittelachse. Dabei wird das Stahlseil 32 auf die Rolle 30 in der entsprechenden, durch den Pfeil gezeigten Richtung aufgerollt. Dementsprechend wird das Stahlseil 32 gleichzeitig im Gegenzug von der Rolle 38 abgerollt, so dass sich diese ebenfalls gemäß dem dort angebrachten Pfeil rechts herum dreht. Gleiches gilt für die mit der Rolle 38 fest verbundene Rolle 44. Da das Stahlseil 46 nun auf die Rolle 44 aufgerollt wird, bewegt sich das Masseelement 50 in diesem Fall nach oben. Aufgrund der Übersetzung können zum einen sehr massereiche und damit schwere Masseelemente 50 verwendet werden. Solche massiven Masseelemente 50 müssen aufgrund der Übersetzung dann auch relativ zur Verdrillung wiederum nur kleine Strecken zurücklegen.

Eine solche sukzessive Verdrillung des Kabelbaums 28 kann nun so lange durchgeführt beziehungsweise toleriert werden, bis das Masseelement 50 beispielsweise in die Nähe des oberen Sensors 52 gelangt. Der Sensor 52 wird dann auslösen und beispielsweise über eine Steuerungseinrichtung für eine Rückführung der Verdrillung des Kabelbaums 28 sorgen. Dieser wird sich dann entgegengesetzt der Pfeilrichtung zurückdrehen, woraufhin sich das Masseelement 50 konsequenterweise zurück nach unten beispielsweise bis etwa in die Mitte des Rohrabschnitts 48 bewegt. Idealerweise ist bei dieser unteren Lage des Masseelements 50 der Kabelbaum 50 vollständig "entdrillt", also gerade nicht mehr verdrillt. Eine entsprechend umgekehrte Vorgehensweise in analoger Form ergibt sich, wenn das Masseelement 50 sich in die Nähe des Sensors 54 am unteren Ende des Rohrabschnitts 48 bewegt.

Falls die Anlage defekt ist, da beispielsweise das Stahlseil 46 gerissen ist, wird das Masseelement 50 dauerhaft den unteren Sensor 54 auslösen. Dies kann beispielsweise zur Detektierung eines Fehlerzustandes verwendet werden.

### Bezugszeichenliste

- 10: Windenergieanlage
- 12: Turm
- 14: Gondel
- 16: Rotor
- 18: Rotorblatt
- 20: Rotornabe
- 22: Rotorachse
- 24: Drehlager
- 26: Markierung
- 28: Kabelbaum
- 30: Rolle
- 32: Stahlseil
- 34: Transformationsvorrichtung
- 36: Umlenkeinheit
- 38: Rolle
- 40: Achse
- 42: Rahmen
- 44: Rolle
- 46: Stahlseil
- 48: Rohrabschnitt
- 50: Masseelement
- 52: Sensor
- 54: Sensor

## Patentansprüche

1. Verfahren zur Ermittlung und/oder Beseitigung der Verdrillung eines Kabelbaums (28) einer Windenergieanlage (10), mit einer gegenüber einem Turm (12) drehbar gelagerten Gondel (14) und wenigstens einem Kabelbaum (28), wobei der Kabelbaum (28) einen festen Endbereich und einen davon beabstandeten, mit der Gondel (14) mitdrehenden, beweglichen Endbereich aufweist und wobei der Kabelbaum (28) zumindest abschnittsweise bei einer Drehung der Gondel (14) zunehmend oder abnehmend verdrillt wird, wobei eine Verdrillung des Kabelbaums (28) in eine Bewegung eines Masseelements (50) transformiert wird, wobei die Verdrillung des Kabelbaums (28) mittels eines flexiblen Zugelements in die Bewegung des Masseelements (50) transformiert wird, **dadurch gekennzeichnet, dass** das Zugelement auf ein den Kabelbaum (28) umgebend angeordnetes erstes Rollelement (30) gewickelt wird, wobei das Zugelement bei einer Drehung der Gondel (14) aufgerollt oder abgerollt wird, wobei eine Zunahme der Verdrillung zu einer Aufwärtsbewegung des Masseelements (50) und zu einer Zunahme der potentiellen Energie führt und wobei eine Abwärtsbewegung zur Abnahme der Verdrillung und zu einer Abnahme der potentiellen Energie führt, wobei zur Ermittlung der Verdrillung die Bewegung des Masseelements (50) ausgewertet wird.

2. Verfahren nach Anspruch 1, **dadurch gekennzeichnet, dass** die Bewegung des Masseelements (50) zumindest im Wesentlichen als Vertikalbewegung ausgeführt wird, wobei das Masseelement (50) vorzugsweise bei einer zunehmenden Verdrillung des Kabelbaums (28) aufwärts und/oder bei einer abnehmenden Verdrillung abwärts bewegt wird.

3. Verfahren nach Anspruch 1 oder 2, **dadurch gekennzeichnet, dass** vorzugsweise auf beiden Seiten einer Neutralstellung des Masseelements (50) beziehungsweise der Gondel (14) eine Zunahme der potentiellen Energie des Masseelements (50) beziehungsweise eine Aufwärtsbewegung erfolgt.

4. Verfahren nach einem der vorhergehenden Ansprüche, **dadurch gekennzeichnet, dass** als flexibles Zugelement ein Seil, insbesondere Stahlseil (32, 46), und/oder ein Riemen und/oder eine Kette verwendet wird.

5. Verfahren nach einem der vorhergehenden Ansprüche, **dadurch gekennzeichnet, dass** das Rollelement als Rad, Rolle und/oder Trommel ausgebildet wird.

6. Verfahren nach einem der vorhergehenden Ansprüche, **dadurch gekennzeichnet, dass** das Zugelement bei einer zunehmenden Verdrillung des Kabelbaums (28) aufgerollt beziehungsweise bei einer abnehmenden Verdrillung des Kabelbaums (28) abgerollt wird.

7. Verfahren nach einem der vorhergehenden Ansprüche, **dadurch gekennzeichnet, dass** das Zugelement zwischen dem ersten Rollelement und einem zweiten Rollelement hin- und her bewegbar ist, insbesondere spulbar, wickelbar und/oder aufrollbar, vorzugsweise alternativ beziehungsweise konsekutiv.

8. Verfahren nach einem der vorhergehenden Ansprüche, **dadurch gekennzeichnet, dass** zumindest eines der Rollelemente die Verdrillung mittels einer Untersetzung oder Übersetzung in die Vertikalbewegung des Masseelements (50) transformiert, wobei vorzugsweise ein weiteres mit dem Masseelement (50) verbundenes Zugelement auf ein weiteres, mit einem der übrigen Rollelemente verbundenes Rollelement aufgewickelt oder abwickelt wird.

9. Verfahren nach einem der vorhergehenden Ansprüche, **dadurch gekennzeichnet, dass** eine Position des Masseelements (50) in der Nähe wenigstens einer vorherbestimmten Endlage mittels wenigstens eines Sensors (52; 54) und/oder einer Skala ermittelt wird, wobei vorzugsweise zwei Endlagen, insbesondere eine obere und eine untere vorgesehen werden und/oder wobei vorzugsweise als Sensor (52, 54) zumindest ein Näherungsschalter verwendet wird.

10. Verfahren nach einem der vorhergehenden Ansprüche, **dadurch gekennzeichnet, dass** die potentielle Energie beziehungsweise Lageenergie des Masseelements (50) zur zumindest teilweisen Abwicklung des Zugelements und/oder zumindest teilweisen Beseitigung der Verdrillung des Kabelbaums (28) verwendet wird, indem insbesondere die Gondel (14) in einen frei drehbaren Modus gebracht wird.

11. Vorrichtung zur Ermittlung und/oder Beseitigung der Verdrillung eines Kabelbaums (28) einer Windenergieanlage, insbesondere zur Ausführung eines Verfahrens nach einem der vorhergehenden Ansprüche, mit einem Kabelbaum (28) mit einem festgelegten Endbereich und einem davon beabstandeten, insbesondere mit einer Gondel (14) der Windenergieanlage (10) drehbaren Endbereich, wobei der Kabelbaum (28) bei einer Drehung der Gondel (14) beziehungsweise des freien Endbereichs zumindest abschnittsweise zunehmend oder abnehmend verdrillbar ist, wobei eine Einrichtung zur Transformation der Verdrillung des Kabelbaums (28) in eine Bewegung eines Masseelements (50) vorgesehen ist, wobei ein Zugelement zur Transformation der Drehung des Kabelbaumes (28) in eine Vertikalbewegung des Masseelements (50) vorgesehen ist, **dadurch gekennzeichnet, dass** das Zugelement auf wenigstens ein am Kabelbaum (28) angeordnetes Rollelement (30) der Vorrichtung wickelbar ist, und bei einer Drehung (14) der Gondel (14) aufgerollt oder abgerollt wird, wobei eine Zunahme der Verdrillung zu einer Aufwärtsbewegung des Masseelements (50) und zu einer Zunahme der potentiellen Energie führt und wobei eine Abwärtsbewegung zur Abnahme der Verdrillung und zu einer Abnahme der potentiellen Energie führt, wobei wenigstens ein Sensor (52, 54) und/oder eine Skala zur Ermittlung einer Position des Masseelements (50) vorgesehen ist, so dass zur Ermittlung der Verdrillung die Bewegung des Masseelements (50) auswertbar ist.

12. Windenergieanlage mit einer Vorrichtung nach Anspruch 11, **dadurch gekennzeichnet, dass** bei einer Transformation der Gondeldrehung um eine Neutralstellung des Masseelements (50) beziehungsweise der Gondel (14) herum jeweils eine Zunahme der potentiellen Energie des Masseelements (50), vorzugsweise ein Anheben desselben, erfolgt.

13. Windenergieanlage mit einer Vorrichtung nach Anspruch 11 oder 12, **dadurch gekennzeichnet, dass** wenigstens ein zweites Rollelement zur Transformation der Gondeldrehung in eine Vertikalbewegung dient und/oder dass eine Untersetzung oder Übersetzung für die Transformation in die Bewegung des Masseelements (50) vorgesehen ist.

14. Windenergieanlage mit einer Vorrichtung nach einem der Ansprüche 11 bis 13, **dadurch gekennzeichnet, dass** der wenigstens eine Sensor (52, 54) und/oder die Skala zur Ermittlung einer Position, insbesondere einer vorherbestimmten Endlage, des Masseelements (50) vorgesehen ist, wobei der wenigstens eine Sensor (52; 54) insbesondere als Näherungsschalter ausgebildet ist.

15. Windenergieanlage mit einer Vorrichtung nach einem der Ansprüche 11 bis 14, **dadurch gekennzeichnet, dass** zur zumindest teilweisen Beseitigung der Verdrillung des Kabelbaums (28) zumindest ein Teil der gespeicherten potentiellen Energie des Masseelements (50) in eine Drehbewegung der Gondel (14) umwandelbar ist.

## Claims

1. Method for determining and/or eliminating the twisting of a cable harness (28) in a wind turbine (10), comprising a nacelle (14) mounted rotatably with respect to a tower (12) and comprising at least one cable harness (28), wherein the cable harness (28) has a fixed end region and, at a distance therefrom, a movable end region that rotates together with the nacelle (14) and wherein the cable harness (28) is increasingly or decreasingly twisted, at least in certain portions, during a rotation of the nacelle (14), wherein a twisting of the cable harness (28) is transformed into a movement of a mass element (50), wherein the twisting of the cable harness (28) is transformed into the movement of the mass element (50) by means of a flexible pulling element, **characterized in that** the pulling element is wound onto a first rolling element (30), which is arranged surrounding the cable harness (28), wherein the pulling element is rolled up or unrolled during a rotation of the nacelle (14), wherein an increase in the twisting leads to an upward movement of the mass element (50) and to an increase in the potential energy and wherein a downward movement leads to a decrease in the twisting and to a decrease in the potential energy, wherein, to determine the twisting, the movement of the mass element (50) is evaluated.

2. Method according to Claim 1, **characterized in that** the movement of the mass element (50) is performed at least substantially as a vertical movement, wherein preferably the mass element (50) is moved upwards when there is an increasing twisting of the cable harness (28) and is moved downwards when there is a decreasing twisting.

3. Method according to Claim 1 or 2, **characterized in that** an increase in the potential energy of the mass element (50) or an upward movement preferably takes place on both sides of a neutral position of the mass element (50) or of the nacelle (14).

4. Method according to one of the preceding claims, **characterized in that** a cable, in particular a steel cable (32, 46), and/or a belt and/or a chain is used as the flexible pulling element.

5. Method according to one of the preceding claims, **characterized in that** the rolling element is formed as a wheel, roller and/or drum.

6. Method according to one of the preceding claims, **characterized in that** the pulling element is rolled up when there is increasing twisting of the cable harness (28) and is unrolled when there is decreasing twisting of the cable harness (28).

7. Method according to one of the preceding claims, **characterized in that** the pulling element can be moved back and forth between the first rolling element and a second rolling element, in particular can be coiled, can be wound and/or can be rolled up, preferably alternatively or consecutively.

8. Method according to one of the preceding claims, **characterized in that** at least one of the rolling elements transforms the twisting into the vertical movement of the mass element (50) by means of a stepping-down or stepping-up transmission, wherein preferably a further pulling element, which is connected to the mass element (50), is wound up onto a further rolling element, which is connected to one of the other rolling elements, or unwound.

9. Method according to one of the preceding claims, **characterized in that** a position of the mass element (50) in the vicinity of at least one predetermined end position is determined by means of at least one sensor (52; 54) and/or a scale, wherein preferably two end positions, in particular an upper end position and a lower end position, are provided and/or wherein at least one proximity sensor is preferably used as the sensor (52, 54).

10. Method according to one of the preceding claims, **characterized in that** the potential energy or positional energy of the mass element (50) is used for the at least partial unwinding of the pulling element and/or at least partial elimination of the twisting of the cable harness (28), in particular by the nacelle (14) being brought into a freely rotatable mode.

11. Device for determining and/or eliminating the twisting of a cable harness (28) in a wind turbine, in particular for performing a method according to one of the preceding claims, comprising a cable harness (28) with a fixed end region and, at a distance therefrom, a rotatable end region that can rotate together with a nacelle (14) of the wind turbine (10), wherein the cable harness (28) can be increasingly or decreasingly twisted, at least in certain portions, during a rotation of the nacelle (14) or of the free end region, wherein a device for transforming the twisting of the cable harness (28) into a movement of a mass element (50) is provided, wherein a pulling element is provided for the transformation of the rotation of the cable harness (28) into a vertical movement of the mass element (50), **characterized in that** the pulling element can be wound onto at least one rolling element (30) of the device that is arranged on the cable harness (28) and is rolled up or unrolled during a rotation (14) of the nacelle (14), wherein an increase in the twisting leads to an upward movement of the mass element (50) and to an increase in the potential energy and wherein a downward movement leads to a decrease in the twisting and to a decrease in the potential energy, wherein at least one sensor (52, 54) and/or a scale is provided for determining a position of the mass element (50), so that, for determining the twisting, the movement of the mass element (50) can be evaluated.

12. Wind turbine with a device according to Claim 11, **characterized in that**, during a transformation of the nacelle rotation about a neutral position of the mass element (50) or of the nacelle (14), in each case an increase in the potential energy of the mass element (50), preferably a raising of the same, takes place.

13. Wind turbine with a device according to Claim 11 or 12, **characterized in that** at least one second rolling element serves for the transformation of the nacelle rotation into a vertical movement and/or **in that** a stepping-down or stepping-up transmission is provided for the transformation into the movement of the mass element (50).

14. Wind turbine with a device according to one of Claims 11 to 13, **characterized in that** the at least one sensor (52, 54) and/or the scale is provided for determining a position, in particular a predetermined end position, of the mass element (50), wherein the at least one sensor (52; 54) is formed in particular as a proximity switch.

15. Wind turbine with a device according to one of Claims 11 to 14, **characterized in that**, for at least partially eliminating the twisting of the cable harness (28), at least part of the stored potential energy of the mass element (50) can be transformed into a rotating movement of the nacelle (14).

## Revendications

1. Procédé pour déterminer et/ou éliminer la torsion d'un faisceau de câbles (28) dans un aérogénérateur (10), comprenant une nacelle (14) montée rotative par rapport à une tour (12) et au moins un faisceau de câbles (28), le faisceau de câbles (28) possédant une zone d'extrémité fixe et une zone d'extrémité mobile espacée de celle-ci et qui accompagne la rotation de la nacelle (14), et le faisceau de câbles (28) subissant une torsion croissante ou décroissante, au moins dans certaines portions, lors d'une rotation de la nacelle (14), une torsion du faisceau de câbles (28) étant transformée en un mouvement d'un élément masse (50), la torsion du faisceau de câbles (28) étant transformée en le mouvement de l'élément masse (50) au moyen d'un élément de traction flexible, **caractérisé en ce que** l'élément de traction est bobiné sur un premier élément rouleau (30) monté entourant le faisceau de câbles (28), l'élément de traction étant enroulé ou déroulé lors d'une rotation de la nacelle (14), une augmentation de la torsion donnant lieu à un mouvement ascendant de l'élément masse (50) et à une augmentation de l'énergie potentielle et un mouvement descendant donnant lieu à une diminution de la torsion et à une diminution de l'énergie potentielle, le mouvement de l'élément masse (50) étant interprété pour déterminer la torsion.

2. Procédé selon la revendication 1, **caractérisé en ce que** le mouvement de l'élément masse (50) est au moins sensiblement exécuté sous la forme d'un mouvement vertical, l'élément masse (50) étant de préférence déplacé vers le haut dans le cas d'une torsion croissante du faisceau de câbles (28) et/ou vers le bas dans le cas d'une torsion décroissante.

3. Procédé selon la revendication 1 ou 2, **caractérisé en ce qu'**une augmentation de l'énergie potentielle de l'élément masse (50) ou un mouvement ascendant a de préférence lieu des deux côtés d'une position neutre de l'élément masse (50) ou de la nacelle (14).

4. Procédé selon l'une des revendications précédentes, **caractérisé en ce que** l'élément de traction flexible utilisé est un câble, de préférence un câble en acier (32, 46), et/ou une courroie et/ou une chaîne.

5. Procédé selon l'une des revendications précédentes, **caractérisé en ce que** l'élément rouleau est réalisé sous la forme d'une roue, d'un rouleau et/ou d'un tambour.

6. Procédé selon l'une des revendications précédentes, **caractérisé en ce que** l'élément de traction est enroulé dans le cas d'une torsion croissante du faisceau de câbles (28) ou déroulé dans le cas d'une torsion décroissante du faisceau de câbles (28).

7. Procédé selon l'une des revendications précédentes, **caractérisé en ce que** l'élément de traction peut effectuer un mouvement de va-et-vient entre le premier élément rouleau et un deuxième élément rouleau, notamment pouvant être spiralé, bobiné et/ou enroulé, de préférence en alternance ou consécutivement.

8. Procédé selon l'une des revendications précédentes, **caractérisé en ce qu'**au moins l'un des éléments rouleaux transforme la torsion en le mouvement vertical de l'élément masse (50) au moyen d'une démultiplication ou d'une surmultiplication, un élément de traction supplémentaire, relié à l'élément masse (50), étant de préférence bobiné sur un élément rouleau supplémentaire relié avec les autres éléments rouleaux, ou en étant débobiné.

9. Procédé selon l'une des revendications précédentes, **caractérisé en ce qu'**une position de l'élément masse (50) est déterminée à proximité d'au moins une position finale préalablement définie au moyen d'au moins un capteur (52, 54) et/ou d'une graduation, deux positions finales étant de préférence prévues, notamment une supérieure et une inférieure, et/ou au moins un détecteur de proximité étant de préférence utilisé en tant que capteur (52, 54).

10. Procédé selon l'une des revendications précédentes, **caractérisé en ce que** l'énergie potentielle de l'élément masse (50) est utilisée pour le déroulement au moins partiel de l'élément de traction et/ou pour l'élimination au moins partielle de la torsion du faisceau de câbles (28), notamment par le fait que la nacelle (14) est amenée dans un mode de rotation libre.

11. Système pour déterminer et/ou éliminer la torsion d'un faisceau de câbles (28) d'un aérogénérateur, notamment destiné à mettre en oeuvre un procédé selon l'une des revendications précédentes, comprenant un faisceau de câbles (28) possédant une zone d'extrémité fixe et une zone d'extrémité espacée de celle-ci, notamment qui peut accompagner la rotation d'une nacelle (14) de l'aérogénérateur (10), le faisceau de câbles (28) subissant une torsion croissante ou décroissante, au moins dans certaines portions, lors d'une rotation de la nacelle (14) ou de la zone d'extrémité libre, un dispositif destiné à transformer la torsion du faisceau de câbles (28) en un mouvement d'un élément masse (50) étant présent, un élément de traction destiné à transformer la rotation du faisceau de câbles (28) en un mouvement vertical de l'élément masse (50) étant présent, **caractérisé en ce que** l'élément de traction peut être bobiné sur au moins un élément rouleau (30) du système disposé sur le faisceau de câbles (28), et étant enroulé ou déroulé lors d'une rotation (14) de la nacelle (14), une augmentation de la torsion donnant lieu à un mouvement ascendant de l'élément masse (50) et à une augmentation de l'énergie potentielle et un mouvement descendant donnant lieu à une diminution de la torsion et à une diminution de l'énergie potentielle, au moins un capteur (52, 54) et/ou une graduation destinés à déterminer une position de l'élément masse (50) étant présents, de sorte que le mouvement de l'élément masse (50) peut être interprété en vue de déterminer la torsion.

12. Aérogénérateur comprenant un système selon la revendication 11, **caractérisé en ce que** lors d'une transformation de la rotation de la nacelle autour d'une position neutre de l'élément masse (50) ou de la nacelle (14), il se produit à chaque fois une augmentation de l'énergie potentielle de l'élément masse (50), de préférence une élévation de celui-ci.

13. Aérogénérateur comprenant un système selon la revendication 11 ou 12, **caractérisé en ce qu'**au moins un deuxième élément rouleau sert à la transformation de la rotation de la nacelle en un mouvement vertical et/ou **en ce qu'**il existe une démultiplication ou une surmultiplication pour la transformation en le mouvement de l'élément masse (50).

14. Aérogénérateur comprenant un système selon l'une des revendications 11 à 13, **caractérisé en ce que** l'au moins un capteur (52, 54) et/ou la graduation sont destinés à déterminer une position, notamment une position finale préalablement définie de l'élément masse (50), l'au moins un capteur (52, 54) étant notamment réalisé sous la forme d'un détecteur de proximité.

15. Aérogénérateur comprenant un système selon l'une des revendications 11 à 14, **caractérisé en ce qu'**en vue d'éliminer au moins partiellement la torsion du faisceau de câbles (28), au moins une partie de l'énergie potentielle accumulée de l'élément masse (50) peut être convertie en un mouvement de rotation de la nacelle (14).
